# EUROPÄISCHE PATENTSCHRIFT

(11) **EP 0 476 388 B1**
(45) Veröffentlichungstag und Bekanntmachung des Hinweises auf die Patenterteilung: **20.11.1996**
(21) Anmeldenummer: 91114525.8
(22) Anmeldetag: 29.08.1991
(51) Int. Cl.: C09D 163/10, C08G 59/17

(54) **Bindemittelzusammensetzung, deren Herstellung, diese enthaltende Überzugsmittel und deren Verwendung**
Binder composition, its preparation, coating based on it and its application
Compositions de liants, sa préparation, revêtement le contenant et son application

(30) Priorität: 29.08.1990 DE 4027259
(43) Veröffentlichungstag der Anmeldung: 25.03.1992
(73) Patentinhaber: Herberts Gesellschaft mit beschränkter Haftung, 42285 Wuppertal (DE)
(72) Erfinder: Bederke, Klaus, Dr. Dipl.-Chem., W-4322 Sprockhövel (DE); Kerber, Hermann, W-5600 Wuppertal 21 (DE); Schubert, Walter, Dr. Dipl.-Chem., W-5600 Wuppertal 12 (DE); Brock, Thomas, Dr. Dipl.-Chem., W-5030 Hürth (DE); Löffler, Helmut, Dipl.-Ing., W-5040 Brühl (DE); Sadowski, Fritz, Dr. Dipl.-Chem., W-5024 Brauweiler (DE)
(74) Vertreter: Türk, Gille, Hrabal, Leifert

(56) Entgegenhaltungen:
- EP-A- 0 008 837
- EP-A- 0 217 005

## Beschreibung

Die Erfindung betrifft eine Bindemittelzusammensetzung, die für die Herstellung von Überzugsmitteln auf Lösemittelbasis und/oder wäßriger Basis geeignet sind.

EP-0-217 005 beschreibt wäßrige Dispersionszusammensetzungen mit Epoxidharzen und Polyaminen als Härter. Die Epoxidharze werden hergestellt durch Umsetzung von aromatischen Monomeren, die sowohl eine Acryloyl- als auch eine Epoxidgruppe enthalten, und äthylenischen Monomeren.

In der EP-A-0 002 801 werden Zweikomponentenlackbindemittel beschrieben, bei denen die Vernetzung der beiden Komponenten durch die Reaktion von Amidoamiden mit Acryloyl-ungesättigten Gruppen erfolgt. Dabei bildet sich an der Oberfläche sehr rasch ein angetrockneter Lackfilm, die vollständige Aushärtung erfolgt aber erst nach mehreren Wochen. Der zusätzliche Einbau von Glycidylfunktionen in die Acryloyl-ungesättigte Verbindung wird nicht erwähnt.

In der EP-A-0 179 954 wird ein Zweikomponentenlackbindemittel beschrieben, in dem Epoxid-funktionalisierte Verbindungen mit Amin-funktionalisierten Vernetzern gehärtet werden. Diese Härter können zusätzlich durch Reaktion der Amingruppe mit Aldehyden oder Ketonen zu einer Schiffschen Base verkappt sein. Auch bei diesem System bildet sich ein harter und benzinbeständiger Film erst nach einigen Tagen. Der zusätzliche Einbau von Acryloyl-ungesättigten Gruppen in die Epoxidgruppen-tragende Verbindung wird nicht beschrieben.

Aufgabe der Erfindung ist die Bereitstellung eines Zweikomponentenbindemittels, das für lösemittelhaltige oder wässrige Überzugsmittel geeignet ist und bereits bei niedrigen Temperaturen, beispielsweise bei Raumtemperatur, rasch zu vergilbungsfreien und lösemittelbeständigen, insbesondere benzinbeständigen Überzügen aushärtet.

Es hat sich gezeigt, daß diese Aufgabe durch ein Bindemittelsystem gelöst werden kann, bei dem ein Filmbildner, der sowohl Epoxid- als auch Acryloylgruppen in einem Zahlenverhältnis von 20:80 bis 80:20 enthält, mit einem Amin-funktionalisierten Härter, der verkappt sein kann, vernetzt wird. Die Kombination aus Epoxid- und Acryloylgruppen erlaubt ein rasches Antrocknen und eine schnelle Vernetzung, wobei auch ein gutes Abdunsten des Lösemittels aus einem das Bindemittelsystem enthaltenden Film gewährleistet ist.

Gegenstand der Erfindung ist daher eine Bindemittelzusammensetzung, die für Lösemittel und/oder Wasser enthaltende Überzugsmittel geeignet ist und die in den Patentansprüchen angegebene Zusammensetzung hat.

Insbesondere betrifft die Erfindung eine Bindemittelzusammensetzung auf der Basis einer Glycidyl- und Acryloyl-funktionellen Komponente A und einer Polyaminkomponente B, die, gemäß einer bevorzugten Ausführungsform, als Bindemittelkomponente A eine Glycidyl- und Acryloyl-funktionelle Verbindung mit mindestens je einer funktionellen Gruppe der Formel 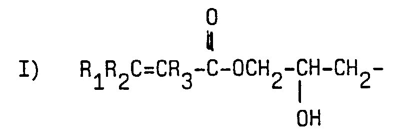 und/oder 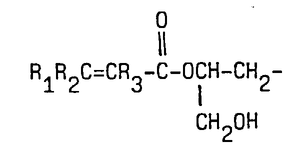 und 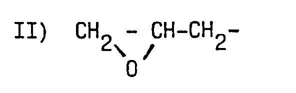 hat; R₁ R₂ und R₃ unabhängig voneinander ein Wasserstoffatom oder ein gerader oder verzweigter Alkylrest mit 1 bis 10 Kohlenstoffatomen sein können;
wobei I und II an einen Rest eines oder mehrerer Poly(meth)acrylsäureester, gegebenenfalls copolymerisiert mit α, β-ungesättigten Monomeren, mit einem Zahlenmittel des Molekulargewichts Mn von 1000 - 10000
gebunden sind;
und als Härterkomponente B eine Polyaminkomponente mit mindestens zwei funktionellen Gruppen der Formel

RHN -,

worin R ein Wasserstoffatom oder ein gerader oder verzweigter Alkylrest mit 1-10 Kohlenstoffatomen oder Cycloalkylrest mit 3-8, bevorzugt 5 oder 6 Kohlenstoffatomen, sein kann, enthält.

Das Zahlenverhältnis Epoxid- zu Acryloylgruppen im Bindemittel liegt zwischen 20:80 und 80:20, bevorzugt zwischen 30:70 und 70:30. Das Zahlenverhältnis bezieht sich auf das Verhältnis der Gesamtanzahl von Epoxidgruppen zu der Gesamtanzahl von Acryloylgruppen in einem Molekül.

Die Bindemittelkomponente der erfindungsgemäßen Bindemittel, die mindestens je eine Glycidyl- und Acryloylfunktion enthält, kann beispielsweise hergestellt werden durch Umsetzung von Di- oder Polyepoxiden mit α, β-ungesättigten Carbonsäuren unter Öffnung des Oxiranringes. Es werden Di- oder Polyepoxide auf der Basis von Glycidyl-funktionalisierten (Meth)acrylpolymeren eingesetzt. Beispiele hierfür sind Copolymere von Glycidyl(meth)acrylat, 1,2-Epoxybutylacrylat oder 2,3-Epoxycyclopentylacrylat. Als Comonomere können Ester der (Meth)acrylsäure wie z.B. Methyl-, Ethyl-, Butyl-, Isobutyl-, Ethylhexyl-, Cyclohexyl- und/oder Laurylacryl gewählt werden, hydroxyfunktionalisierte Ester der (Meth)acrylsäure wie z.B. Hydroxyethyl- und/oder Hydroxypropyl-Ester, weiterhin auch Styrol, Vinyltoluol und/oder -Methylstyrol. Das Zahlenmittel des Molgewichtes kann zwischen 1000 - 10000 liegen, bevorzugt bei 2000 - 5000. Weitere copolymerisierbare Glycidylmonomere sind z.B. (Meth)allylglycidylether oder 3,4-Epoxy-1-vinylcyclohexan. Die Herstellung der Copolymere erfolgt über radikalische Lösungspolymerisation, sie ist dem Fachmann bekannt und bedarf keiner weiteren Erläuterung.

Die Di- oder Polyepoxide können zur Herstellung der Filmbildnerkomponente der Bindemittel beispielsweise mit ein- oder mehrfach ungesättigten Monocarbonsäuren, z.B. mit 2 bis 10, vorzugsweise 3 bis 6 Kohlenstoffatomen, wie Zimtsäure, Crotonsäure, Citraconsäure, Sorbinsäure, vorzugsweise Acryl und/oder Methacrylsäure umgesetzt werden.

Zur Synthese der Glycidyl- und Acryloyl-funktionalisierten Verbindungen können die Reaktionskomponenten in einem Lösemittel erwärmt werden. Als Lösemittel sind aprotische organische Lösemittel geeignet. Es ist günstig, die Herstellung unter Inertgas durchzuführen. Die ungesättigte Monocarbonsäure wird in einer derartigen Menge eingesetzt, daß das gewünschte Zahlenverhältnis von Epoxid- und Acryloylgruppen erzielt wird. Die Reaktion wird solange fortgesetzt, bis die eingesetzte ungesättigte Monocarbonsäure verbraucht ist. Im folgenden wird ein Beispiel für eine Synthese der Epoxid- und Acryloyl-funktionalisierten Verbindungen angegeben: Die Epoxid-funktionalisierte Verbindung wird unter Inertgas in einem aprotischen organischen Lösemittel gelöst und z.B. auf 80°C erhitzt. Die ungesättigte Monocarbonsäure, die ggfs. in einem organischen aprotischen Lösemittel gelöst sein kann, wird dann in einem Zeitraum von z.B. 1 Stunde zudosiert. Die Reaktionslösung wird anschließend bei 80°C gerührt, bis die Säurezahl der Lösung kleiner 1 mg KOH/g Festharz ist.

Die Vernetzung der Acryloyl- und Epoxidgruppen-tragenden Bindemittelkomponente erfolgt mit Verbindungen, die mindestens zwei primäre oder sekundäre Aminfunktionen tragen. Um eine wirkungsvolle Vernetzung der Bindemittelkomponenten A und B zu erzielen, sollte zumindest ein Teil der Komponenten A und/oder B trifunktionell sein. Selbstverständlich ist es auch möglich, tri- und mehrfunktionelle Komponenten A und/oder tri- und mehrfunktionelle Komponenten B zu verwenden.

Polyamine, die als Vernetzer geeignet sind, können selbst filmbildende Eigenschaften haben. Geeignete Polyamine sind Diamine und Amine mit mehr als zwei Aminogruppen, wobei die Aminogruppen primär und/oder sekundär sein können. Darüberhinaus sind als Polyamine Addukte geeignet, die aus Polyaminen mit mindestens zwei primären Aminogruppen und mindestens einer, bevorzugt einer, sekundären Aminogruppe bestehen, mit Epoxyverbindungen, Polyisocyanaten und Acryloylverbindungen. Darüberhinaus sind auch Aminoamide und Addukte aus carboxylfunktionalisierten Acrylaten mit Iminen geeignet.

Beispiele für geeignete Di- und Polyamine sind beispielsweise in den EP-A-0 240 083 und EP-A-0 346 982 beschrieben. Beispiele hierfür sind aliphatische und/oder cycloaliphatische Amine mit 2-24 C-Atomen, die 2-10 primäre Aminogruppen, bevorzugt 2-4 primäre Aminogruppen, und 0-4 sekundäre Aminogruppen enthalten. Repräsentative Beispiele hierfür sind Ethylendiamin, Propylendiamin, Butylendiamin, Pentamethylendiamin, Hexamethylendiamin, 4,7-Dioxa-decan-1,10-diamin, 1,2-Diaminocyclohexan, 1,4-Diaminocyclohexan, Isophorondiamin, Diethylentriamin, Dipropylentriamin, 2,2-Bis-(4-aminocyclohexyl)propan; Polyether-Polyamine, z.B. solche mit dem Handelsnamen Jeffamine der Jefferson Chemical Company, Bis-(3-aminopropyl)ethylamine, 3-Amino-1-(methylamino)-propan und 3-Amino-1-(cyclohexylamino)propan.

Beispiele für gebräuchliche Polyamine auf der Basis von Addukten von polyfunktionellen Aminkomponenten mit di- oder polyfunktionellen Epoxy-, Verbindungen sind solche, die hergestellt werden unter Verwendung von beispielsweise di- oder polyfunktionellen Epoxyverbindungen, wie Diglycidyl- oder Polyglycidylether von (cyclo)aliphatischen oder aromatischen Hydroxyverbindungen wie Ethylenglykol, Glycerol, 1,2- und 1,4-Cyclohexandiol, Bisphenole wie Bisphenol A, Polyglycidylether von Phenolformaldehyd-Novolaken, Polymere ethylenisch ungesättiger Gruppen, die Epoxy-Gruppen enthalten, wie Glycidyl(meth)acrylat, N-Glycidyl(meth)-acrylamid und/oder Allylglycidylether, wahlweise copolymerisiert mit verschiedenen anderen ethylenisch ungesättigten Monomeren, Glycidylether von Fettsäuren mit 6-24 C-Atomen, epoxidierte Polyalkadiene, wie epoxidiertes Polybutadien, Hydantoin-Epoxy-Harze, Glycidyl-gruppenhaltige Harze, wie Polyester oder Polyurethane, die eine oder mehrere Glycidylgruppen pro Molekül enthalten, und Gemische der genannten Harze und Verbindungen.

Die Anlagerung der Polyamine an die genannten Epoxyverbindungen erfolgt unter Ringöffnung der Oxirangruppierung. Die Reaktion kann beispielsweise in einem Temperaturbereich von 20-100°C erfolgen, bevorzugt aber zwischen 20-60°C. Gegebenenfalls kann mit 0,1 - 2 Gew.% einer Lewis-Base wie Triethylamin oder einem Ammoniumsalz wie Tetrabutylammoniumjodid katalysiert werden.

Gebräuchliche Isocyanate für Polyamin-Isocyanat-Addukte sind aliphatische, cycloaliphatische und/oder aromatische Di-, Tri- oder Tetraisocyanate, die ethylenisch ungesättigt sein können. Beispiele hierfür sind 1,2-Propylendiisocyanat, Trimethylendiisocyanat, Tetramethylendiisocyanat, 2,3-Butylendiisocyanat, Hexamethylendiisocyanat, 2,2,4-Trimethylhexamethylen-diisocyanat, 2,4,4-Trimethylhexamethylendiisocanat, ω,ω'-Dipropyletherdiisocyanat, 1,3-Cyclopentandiisocyanat, 1,2- und 1,4-Cyclohexandiisocyanat, Isophorondiisocyanat, 4-Methyl-1,3-diisocyanatcyclohexan, Transvinylidendiisocyanat, Dicyclohexylmethan-4,4'-diisocyanat, 3,3'-Dimethyl-dicyclohexylmethan-4,4'-diisocyanat, Toluydendiisocyanate, 1,3-Bis(1-isocyanato-1-methylethyl)benzol, 1,4-Bis(1-isocyanato-1-methylethyl)-benzol, 4,4'-Diisocyanatodiphenyl, 3,3'-dichloro-4,4'-diisocyanatodiphenyl, Addukte aus 2 Molen eines Diisocyanates, z.B. Hexamethylendiisocyanat oder Isophorondiisocyanat an ein Mol eines Diols, z.B. Ethylenglykol, das Addukt aus 3 Molen Hexamethylendiisocyant an 1 Mol Wasser (erhältlich unter dem Handelsnamen Desmodur N von der Bayer AG) das Addukt aus 1 Mol Trimethylolpropan und 3 Molen Toluidendiisocyanat (erhältlich unter dem Handelsnamen Desmodur L von der Bayer AG) und das Addukt aus 1 Mol Trimethylolpropan und 3 Molen Isophorondiisocyanat.

Die Anlagerung der Polyamine an die genannten Isocyanatverbindungen erfolgt beispielsweise in einem Temperaturbereich von 20 - 80°C, bevorzugt 20 - 60°C. Gegebenenfalls kann durch Zugabe von 0,1 - 1 Gew.% eines tertiären Amins, wie Triethylamin und/oder 0,1 - 1 Gew.% einer Lewis-Säure, wie Dibutylzinnlaurat katalysiert werden.

Beispiele für di- oder polyfunktionelle acryloylungesättigte Verbindungen zum Herstellen von Polyaminaddukten sind in der Patentschrift US 4 303 563 beschrieben, z.B. Ethylenglykoldiacrylat, Diethylenglykoldiacrylat, Trimethylenglykoldiacrylat, 1,3-Butylenglykoldiacrylat, 1,6-Hexamethylenglykoldiacrylat, Trimethylolpropandiacrylat, Pentaerytrituoltetraacrylat und Pentaerytrituoltriacrylat. Weitere Beispiele für polyfunktionelle acryloyl-ungesättigte Acrylate sind:
1) Urethanacrylate, erhalten durch die Reaktion einer Isocyanatgruppe eines Polyisocyanates mit einem Hydroxyacrylat, z.B. Hexamethylendiisocyanat und Hydroxyethylacrylat, die Herstellung ist beschrieben in US 3 297 745,
2) Polyetheracrylate, erhalten durch Umesterung eines hydroxyterminierten Polyethers mit Acrylsäure, beschrieben in US 3 380 831,
3) Polyesteracrylat, erhalten durch Veresterung eines Hydroxylgruppenhaltigen Polyesters mit Acrylsäure, beschrieben in US 3 935 173,
4) Polyfunktionelle Acrylate, erhalten durch die Reaktion eines Hydroxyl-funktionalisierten Acrylates, wie z.B. Hydroxyethylacrylat mit
   a) Dicarbonsäuren mit 4-15 C-Atomen,
   b) Polyepoxiden mit terminalen Glycidylgruppen,
   c) Polyisocyanaten mit terminalen Isocyanatgruppen, beschrieben in US 3 560 237,
5) Acrylat-terminierte Polyester, erhalten durch die Reaktion von Acrylsäure, einem Polyol mit mindestens drei Hydroxyfunktionen und einer Dicarbonsäure, beschrieben in US 3 567 494,
6) Polyacrylat, erhalten durch die Reaktion von Acrylsäure mit einem Epoxidfunktionen enthaltenden epoxidiertem Öl, wie Sojabohnenöl oder Leinsamenöl, beschrieben in US 3 125 592,
7) Polyacrylat, erhalten durch die Reaktion von Acrylsäure mit Epoxidgruppen eines Diglycidylethers von Bisphenol A, beschrieben in US 3 373 075,
8) Polyacrylat, erhalten durch die Reaktion von Acrylsäure an ein Epoxidfunktionalisiertes Vinylpolymer, z.B. Polymere mit Glycidylacrylat oder Vinylglycidylether, beschrieben in US 3 530 100,
9) Polyacrylat, erhalten durch die Reaktion von Acrylsäureanhydrid mit Polyepoxiden, beschrieben in US 3 676 398,
10) Acrylat-Urethanester, erhalten durch die Reaktion eines Hydroxyalkylacrylates, mit einem Diisocyanat und einem Hydroxylfunktionalisierten Alkydharz, beschrieben in US 3 676 140,
11) Acrylat-Urethanpolyester, erhalten durch die Reaktion eines Polycaprolactondiols- oder triols mit einem organischen Polyisocyanat und mit einem Hydroxyalkylacrylat, beschrieben in US 3 700 634,
12) Urethan-Polyacrylat, erhalten durch die Reaktion eines Hydroxyfunktionalisierten Polyesters mit Acrylsäure und einem Polyisocyanat, beschrieben in US 3 759 809.

Die Acryloyl-Endgruppen der Di- bzw. Polyacrylmonomeren bzw. der Polyacrylate aus den Beispielen 1) bis 12) können mit Polyaminen funktionalisiert werden. Die Anlagerung kann z.B. in einem Temperaturbereich von 20 - 100°C, bevorzugt bei 40 - 60°C, erfolgen.

Eine weitere Methode zur Synthese eines Amin-funktionalisierten Härters ist in der EP 2801 beschrieben. Hier werden Acrylsäureestercopolymere mit Diaminen unter Alkoholabspaltung amidisiert. Die dabei erhaltene reaktive Gruppe besitzt folgende Struktur: 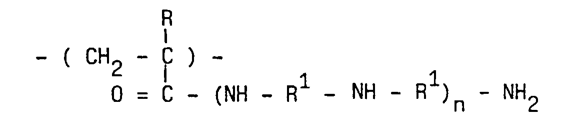
R = H oder CH₃
R¹ = Alkylengruppen mit 2 oder 3 C-Atomen, die gleich oder verschieden sein können
n = 0, 1, 2 oder 3 wobei der Rest 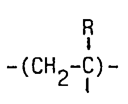 aus dem Acrylsäureestercopolymergerüst stammt.

Das Acrylsäureestercopolymere besitzt ein mittleres Zahlmittel des Molgewichts Mn von 1000 - 20000, bevorzugt 2000 - 5000. Beispiele für mögliche Comonomere sind Ester der (Meth)acrylsäure wie z.B. Methyl-, Ethyl-, Butyl-, Cyclohexyl(meth)acrylat, Hydroxyethyl(meth)acrylat, Hydroxypropyl(meth)acrylat, weiterhin (Meth)acrylsäure, Styrol und Vinyltoluol.

Besonders bevorzugt ist Methylacrylat, da dieses Monomer der Aminolyse besonders leicht zugänglich ist. Der Anteil an Methylacrylat am Copolymeren beträgt 2 - 35 Gew.%. Die Herstellung der Copolymere erfolgt durch Lösungspolymerisation in üblichen Lösungsmitteln wie Toluol, Xylole, Acetate, z.B. Butylacetatoder Ethylglykolacetat, Ethern wie Tetrahydrofuran oder Aromatengemische wie das Handelsprodukt Solvesso 100 Die Synthese der Copolymere ist dem Fachmann bekannt und bedarf keiner weiteren Erläuterung. Die Polyamine, die bei der Aminolyse eingesetzt werden, müssen mindestens zwei primäre oder sekundäre Amingruppen enthalten und wurden bereits zuvor beschrieben.

Ebenfalls als Härter verwendbar sind Reaktionsprodukte aus der Umsetzung eines (Meth)acrylsäurecopolymeren mit Alkyleniminen, wie sie in der EP-A-0 179 954 beschrieben wurden. Die erhaltenen funktionellen Gruppen besitzen die Struktur: 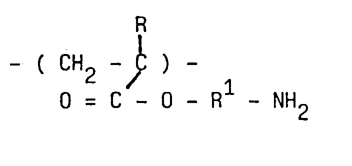
R = H oder CH₃
R¹ = Alkylengruppe mit 2 bis 4 C-Atomen, wobei der Rest 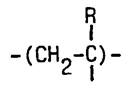 wie vorstehend definiert ist.

Neben (Meth)acrylsäure kann das Copolymere Ester der (Meth)acrylsäure oder Vinylverbindungen wie Styrol enthalten. Die Comonomeren wurden bereits an anderer Stelle beschrieben. Beispiele für Alkylenimine sind z.B. Propylen- oder Butylenimin.

Die terminierten Aminogruppen der Polyamin-Härterkomponente B können verkappt sein, z.B. mit Ketonen oder Aldehyden unter Ausbildung Schiffscher Basen.
Alle bisher beschriebenen Polyamine besitzen gegenüber dem erfindungsgemäßen Bindemittel eine sehr hohe Reaktivität, was sich in einer sehr geringen Topfzeit äußert. Aus diesem Grunde kann es zweckmäßig sein, die terminierten Amingruppen der genannten Polyamine mit Aldehyden oder Ketonen unter Wasserabspaltung zu Schiffschen Basen bzw. Aldiminen oder Ketiminen umzusetzen. In luftfeuchtefreier Atmosphäre besitzen Gemische aus dem erfindungsgemäßen Bindemittel und dem derart geschützten Härter eine sehr hohe Topfzeit von mehreren Tagen bis Wochen. Beispiele für zur Verkappung verwendbare Aldehyde und Ketone sind C₃-C₁₀- und/oder Verbindungen, wie Hexylaldehyd, Octylaldehyd, Diisopropylketon und/oder Methylisobutylketon. Die beiden letzten Verbindungen sind besonders bevorzugt, weil sie nur eine geringe Tendenz zu Nebenreaktionen zeigen.

In den erfindungsgemäßen Bindemitteln liegt das Mengenverhältnis der Äquivalentgewichte der Komponenten A und B bei 2:0,5 bis 1:1,5, bevorzugt bei 2:0,5 bis 1.

Unter dem Äquivalentgewicht ist in diesem Sinne das Gewicht in g zu verstehen, das ein Mol der funktionellen Gruppe enthält. Im Falle der Komponente A handelt es sich um ein Mol der Summe aus funktionellen Gruppen von Epoxid- und Acryloylgruppen. Im Falle der Komponente B handelt es sich um ein Mol der Aminfunktionen.

Die erfindungsgemäßen Bindemittelzusammensetzungen können in üblicher Weise zu Überzugsmitteln, beispielsweise Lacken, formuliert werden. Dies erfolgt im allgemeinen durch Zusatz von Lösemitteln, Wasser oder Lösemittel/Wasser-Gemischen. Dabei ist es möglich, eine Mischung der Komponenten A und B zu bereiten und diese in üblicher Weise durch den Zusatz von Lösemitteln und/oder Wasser und üblichen Additiven zu Überzugsmitteln aufzuarbeiten. Es besteht jedoch auch die Möglichkeit, zunächst eine der Komponenten A oder B durch Zusatz von Lösemitteln, Wasser oder Lösemittel/Wasser-Gemischen und üblichen Additiven aufzubereiten und dann die andere Komponente zuzusetzen.

Geeignete organische Lösemittel für die Herstellung von Überzugsmitteln, beispielsweise Lacken, sind solche, wie sie auch bei der Herstellung der Einzelkomponenten A und B verwendet werden. Beispiele für derartige Lösemittel sind organische Lösemittel, wie aliphatische und aromatische Lösemittel, wie aliphatische und aromatische Kohlenwasserstoffe, beispielsweise Toluol, Xylole, Gemische aliphatischer und/oder aromatischer Kohlenwasserstoffe, Ester, Ether und Alkohole. Es sind dies lackübliche Lösemittel. Zur Herstellung der Überzugsmittel aus den erfindungsgemäßen Bindemitteln können auch wäßrige Lösungen bereitet werden. Hierzu können gegebenenfalls Emulgatoren verwendet werden, wie sie auf dem Lacksektor üblich sind.

Zur Herstellung der Überzugsmittel können übliche Additive zugesetzt werden, wie sie auf dem Lacksektor üblich sind.

Beispiele für solche Additive sind Pigmente, beispielsweise farbgebende Pigmente, wie Titandioxid oder Ruß und Effektpigmente, wie Metallschuppenpigmente und/oder Perlglanzpigmente. Die erfindungsgemäßen Bindemittelzusammensetzungen eignen sich besonders günstig für Überzugsmittel, die derartige Effektpigmente enthalten. Bevorzugt enthalten sie Effektpigmente zusammen mit farbgebenden Pigmenten oder farbgebende Pigmente zusammen mit Füllstoffen. Weitere Beispiele für Additive sind Füllstoffe, wie z.B. Talkum und Silikate, Weichmacher, Lichtschutzmittel, Stabilisatoren und Verlaufsmittel, wie Silikonöle.

Bei den erfindungsgemäßen Bindemittelzusammensetzungen handelt es sich um sogenannte Zweikomponenten-Systeme. Dies bedeutet, daß die Komponenten A und B getrennt gelagert werden und erst vor der Anwendung bzw. zur Anwendung beispielsweise zur Herstellung von Überzugsmitteln vermischt werden.

Die aus den erfindungsgemäßen Bindemitteln hergestellten Überzugsmittel werden dann auf die gewünschte Applikationsviskosität durch entsprechende Regelung des Zusatzes von Lösemitteln und/oder Additiven eingestellt.

Die Überzugsmittel können je nach Mengenverhältnis der Komponente A zur Komponente B und Äquivalentgewicht auf Topfzeiten zwischen 1 und 24 Stunden eingestellt werden, so daß eine lange Verarbeitungsdauer der aus dem Zweikomponenten-Bindemittelsystem fertiggestellten Überzugsmittel gewährleistet ist. Die Applikation der so hergestellten Überzugsmittel kann in üblicher Weise erfolgen, beispielsweise durch Tauchen, Spritzen, Streichen oder auf elektrostatischem Wege.

Die Aushärtung von aus dem Überzugsmittel erstellten Überzügen kann bei einer relativen Luftfeuchte von 20 bis 90% in einem weiteren Temperaturbereich von 10 bis 180°C, bevorzugt zwischen 20 bis 80°C, erfolgen.

Aus den erfindungsgemäßen Bindemitteln können verschiedene Arten von Überzugsmitteln hergestellt werden, beispielsweise Lacke, die als pigmentierte Basislacke pigmentierte Decklacke oder auch als Klarlacke bereitet werden können. Sie sind jedoch auch zur Herstellung von beispielsweise Füllern geeignet.

Die aus den erfindungsgemäßen Bindemitteln hergestellten Überzugsmittel sind für Überzüge geeignet, die auf einer Vielzahl von Substraten haften, wie beispielsweise Holz, Textilien, Kunststoff, Glas, Keramik und insbesondere Metall. Die Überzugsmittel können auch im Mehrschichtverfahren eingesetzt werden. So können sie beispielsweise auf Grundierungen, Basislacke, Füller oder auf bereits vorhandene Decklacke aufgetragen werden. Der Auftrag kann entweder auf die gehärteten Vorschichten erfolgen oder naß-in-naß durchgeführt werden, wobei anschließend ein gemeinsames Einbrennen der Mehrschichtüberzüge erfolgt. Es sind sämtliche übliche Vorbeschichtungen geeignet.

Die aus den erfindungsgemäßen Bindemitteln hergestellten Überzugsmittel eignen sich, wie vorstehend erwähnt, besonders gut für die Herstellung von Mehrschichtüberzügen. Sie können beispielsweise als Basislacke formuliert und mit üblichen Klarlacken überlackiert werden. Als Klarlacke können auch solche auf der Basis der erfindungsgemäßen Bindemittel eingesetzt werden.

Werden die aus den erfindungsgemäßen Bindemitteln hergestellten Überzugsmittel als Klarlacke formuliert, so können sie bei der Herstellung von Mehrschichtüberzügen beispielsweise auf verschiedene Basislacke aufgebracht werden. Die Basislacke können wäßrig oder nicht-wäßrig sein. Das Applizieren der Klarlacke kann nach dem Einbrennen, Trocknen und gegebenenfalls nach kurzem Ablüften naß-in-naß erfolgen, worauf im letzteren Falle anschließend gemeinsam eingebrannt wird.

Im Folgenden werden einige Beispiele für Basislacke aufgeführt, die bevorzugt mit aus den erfindungsgemäßen Bindemitteln bereiteten Klar- oder Decklacken beschichtet werden können:

Wasserbasislacke auf der Basis von 50 - 95 Gew.% eines wäßrigen, Epoxidfunktionalisierten Emulsionspolymerisates und 95 bis 5 Gew.% einer anionischen Polyurethandispersion mit einer Säurezahl von 5 bis 10. Als Anreibeharze für in solchen Wasserbasislacken verwendete Pigmente und Additive eignen sich besonders Poly(meth)acrylatharze (beispielsweise in einer Menge bis zu 20 Gew.%). Beispiele für solche Wasserbasislacke sind in der DE-OS 3 628 124 beschrieben.

Basislacke auf der Basis von Polyestern mit einer Glasübergangstemperatur von > 30°C, Melaminharzen (z. B. partiell butylierten Melaminharzen), Polyharnstoffplastifizierern (beispielsweise auf der Basis eines Addukts aus Butylurethan und Formaldehyd) und einem Copolymer aus Polyethylen (85 Gew.%) - Vinylacetat (15 Gew.%) als Wachsdispersion. Solche Basislacke können übliche Additive, wie Celluloseacetobutyrat (beispielsweise mit unterschiedlichen Molekulargewichtsbereichen) enthalten. Beispiele für solche Basislacke sind in der EP-A-187 379 beschrieben.

Ein für Reparaturzwecke geeigneter Wasserbasislack (besonders geeignet für Metallic-Lackierungen) enthält 50 bis 90 Gew.% Polyurethane mit Carbonatgruppierungen und einem Zahlenmittel des Molgewichts von 70000 bis 500000 auf der Basis von Reaktionsprodukten aus Polyisocyanaten mit Polyhydroxyverbindungen und einem Anteil an Polyhydroxypolycarbonaten und 10 bis 50 Gew.% Polyurethane mit einem Zahlenmittel des Molgewichts von 20000 bis 60000. Beispiele für derartige Lacke sind in der DE-OS 41 15 015 beschrieben.

Ein Beispiel für einen besonders für Reparaturzwecke geeigneten Wasserbasislack (insbesondere Unifarben) enthält 50 bis 90 Gew.% Polyurethane mit Carbonatgruppierungen, mit einer Glasübergangstemperatur von < 0°C auf der Basis von Reaktionsprodukten aus Polyisocyanaten mit Polyhydroxylverbindungen, mit einem Anteil an Polyhydroxylcarbonaten und 10 bis 50 Gew.% von Reaktionsprodukten carboxylfunktioneller Polykondensate und α,β-olefinisch ungesättigter Monomerer mit einer Glasübergangstemperatur von > 0°C in Form einer wäßrigen Dispersion. Beispiele für solche Wasserbasislacke sind in der DE-A-41 15 042 beschrieben.

Ein Beispiel für Basislacke auf Lösemittelbasis, die besonders für Reparaturzwecke geeignet sind, enthält physikalisch trocknende Bindemittel auf der Basis von thermoplastischem Polyester- und/oder Acrylharz im Gemisch mit Celluloseethern bzw. Celluloseestern und/oder Polyvinylacetalen. Ferner enthalten sind selbsthärtende Acrylharzbindemittel, die Farbpigmente enthalten und mit Isocyanat reagierende Wasserstoffatome aufweisen sowie zusätzlich Gemische von Lösungsmitteln gelösten Celluloseethern und/oder Celluloseestern und/oder Cellulosehalbestern. Solche Lacke sind in der DE-OS 29 24 632 beschrieben.

Sämtliche der vorstehenden Basislackformulierungen können übliche Lackadditive enthalten, sowie übliche Füllstoffe und farbgebende Pigmente sowie auch Metallicpigmente, wie Aluminium- bzw. Edelstahlbronzen und andere Effektpigmente.

Beispiele für Basislacke, die mit Klarlacken auf der Basis erfindungsgemäßer Bindemittel beschichtet werden können, sind auch PulverLacke, wie sie beispielsweise in "Products Finishing", April 1976, Seiten 54 bis 56 beschrieben sind.

Ein bevorzugtes Anwendungsgebiet für die erfindungsgemäßen Bindemittel stellt die Bereitstellung von Überzugsmitteln für Lackierungen auf dem Gebiet des Kraftfahrzeugsektors dar. Durch die günstigen Härtungsbedingungen sind diese besonders auch für Kraftfahrzeug-Reparaturlackierungen geeignet.

Die vorliegende Erfindung betrifft somit auch Verfahren zur Herstellung von Überzügen auf verschiedenen Substraten, bei denen auf das Substrat ein aus den erfindungsgemäßen Bindemitteln hergestelltes Überzugsmittel appliziert wird, worauf getrocknet und gehärtet wird. Die Erfindung betrifft auch die Verwendung der erfindungsgemäßen Bindemittelzusammensetzung in Klarlacken, Füllern oder Decklacken.

In jedem Fall erhält man mit den aus den erfindungsgemäßen Bindemitteln hergestellten Überzugsmitteln Filme mit gutem Glanz, guter Härte und guter Wasser- und Lösemittelbeständigkeit, insbesondere Superbenzinbeständigkeit. Die Aushärtung erfolgt sehr rasch, so ist beispielsweise eine Staubtrocknung schon innerhalb weniger Minuten, wie etwa 10 Minuten erzielbar.

Die folgenden Beispiele dienen zur Erläuterung der Erfindung. Alle Teile (T) beziehen sich auf das Gewicht.

### Synthese des Glycidyl- und Acryloyl-ungesättigten Harzes

### Beispiel 1

a) In einem 4 Liter-Dreihalskolben, der mit Rührer, Thermometer, Tropftrichter und einem Rückflußkühler versehen ist, werden 1000 T Xylol vorgelegt und unter Rühren auf 90°C erhitzt. Innerhalb von 5 h wird eine Mischung aus
   380 T Glycidylmethacrylat
   128 T Butylmethacrylat
   252 T Butylacrylat
   200 T Styrol und
   40 T tert. Butylperoctoat
   zugetropft. Das erhaltene epoxyfunktionelle Harz hat eine Viskosität von 70 mPas (25°C) und einen Festkörper von 50,1 % (1h/150°C).
b) 2000 T dieses Harzes werden mit 4,8 T Triphenylphosphit, 500 T Butylacetat 98/100 und 0,9 T Methylhydrochinon in einem 4Liter-Kolben, der mit Rührer, Thermometer, Tropftrichter und Rückflußkühler versehen ist, unter Rühren auf 90°C erwärmt. Bei dieser Temperatur wird eine Mischung aus 93 T Acrylsäure und 200 g Butylacetat 98/100 innerhalb von 5 h zugetropft, anschließend bis zum Erreichen einer Säurezahl von 1 umgesetzt. Das Harz wird durch Destillation auf einen Festkörper von 60 % eingestellt und hat dann eine Viskosität von 435 mPas.

### Beispiel 2

2000 T des Glycidyl-funktionalisierten Harzes aus Beispiel 1a) werden mit 4,8 T Triphenylphosphit, 0,9 T Methylhydrochinon und 500 T Butylacetat 98/100 in einem 4 Liter-Kolben, der mit Rührer, Thermometer, Tropftrichter und Rückflußkühler versehen ist, unter Rühren auf 90°C erwärmt. Bei dieser Temperatur wird eine Mischung aus 110 g Acrylsäure und 250 g Butylacetat 98/100 innerhalb von 5 h zugetropft, anschließend bis zum Erreichen einer

Säurezahl von 1 umgesetzt. Das Harz wird durch Destillation auf einen Festkörper von 60 % eingestellt und hat dann eine Viskosität von 520 mPas.

### Beispiel 3

3000 T des Glycidyl-funktionalisierten Harzes aus Beispiel 1a) werden mit 6,3 T Triphenylphosphit, 1,2 T Methylhydrochinon und 670 T Butylacetat (98/100) in einem 6-Liter-Kolben, der mit Rührer, Thermometer, Tropftrichter und Rückflußkühler versehen ist, unter Rühren auf 90°C erwärmt. Bei dieser Temperatur wird eine Mischung aus 186 g Acrylsäure und 370 g Butylacetat (98/100) innerhalb von 5 Stunden zugetropft, anschließend bis zum Erreichen einer Säurezahl von 1 umgesetzt. Das Harz wird durch Destillation auf einen Festkörper von 80 % eingestellt. Zur Herstellung einer wäßrigen Emulsion werden nun 708 g vollentsalztes Wasser mit 0,56 g eines handelsüblichen Polysiloxan-Entschäumers vorgelegt und auf 45°C erhitzt. 1520 g des oben erhaltenen Acrylharzes werden mit 60,80 g eines Polyoxyethylenpolyoxypropylenalkylphenol-Emulgators vermischt und auf 75°C erwärmt. Über einen Rotor/Stator-Homogenisierer wird dieses Harz geschert und in dem Wasser/Polysiloxan-Gemisch emulgiert. Die Dosierung erfolgt innerhalb von 8 Minuten. Der Rotor besitzt eine Umdrehungsgeschwindigkeit von 10.000 Umdrehungen pro Minute.

Während der Zudosierung wird die Vorlage mit 45°C warmem Wasser gekühlt. Die erhaltene trübweiße Emulsion hat einen Festkörper von 55,8 %, eine Viskosität von 57 mPas und eine mittlere Teilchengröße, die mit Hilfe der Photonenkorrelationsspektroskopie bestimmt wurde, von 626 nm.

### Synthese der Vernetzer

### Beispiel 4

In einem 2-Liter-Kolben, der mit Rührer, Thermometer, Tropftrichter und Rückflußkühler versehen ist, werden 568 T Triethylentetramin und 1000 T Methylisobutylketon unter Inertgas vorgelegt. Das Reaktionsgemisch wird zum Sieden erhitzt und gerührt, bis kein weiteres Reaktionswasser abgeschieden wird (138 g H₂O, = 96 % Theorie).

### Beispiel 5

In einem 1-Liter-Kolben werden 142,5 g vollentsalztes Wasser, 7,5 g eines Emulgators auf der Basis eines Polyoxypropylen-polyoxyethylensorbitansäurediesters ungesättigter Fettsäuren und 0,1 g eines handelsüblichen Polysiloxan-Entschäumers bei 25°C vorgelegt. Das Gemisch wird mit einem Rührer, der mit einer Geschwindigkeit von ca. 7500 Umdrehungen pro Minute rotiert, gerührt. Innerhalb von drei Minuten werden bei 25°C anschließend 162 g eines cycloaliphatischen Amins (Aminzahl 265 mg/KOH/g, Viskosität 300 mPas) zugegeben. Die erhaltene milchigweiße Emulsion hat einen Festkörper von 55,0 % und eine Viskosität von 47 mPas. Die mittlere Teilchengröße, die mit Hilfe der Photonenkorrelationsspektroskopie bestimmt wurde, liegt bei 631 nm.

### Herstellung von Lacken

### Beispiel 6

a) Herstellung des Stammlackes:
   90 T des Glycidyl- und Acryloyl-funktionalisierten Harzes aus Beispiel 1 b)
   0,7 T Verlaufmittel auf der Basis eines handelsüblichen Siliconöls (10%ig im Butylacetat 98/100)
   0,4 T einer Lösung eines sterisch gehinderten Amins (UV-Stabilisator)
   0,4 T eines Benzotriazolderivats (UV-Stabilisator)
   8,5 T Verdünnungsmittel:
      25 % Butylacetat (98%ig)
      20 % Methoxypropylacetat
      25 % Xylole
      20 % Ethoxypropanolacetat
      10 % Butylglykolacetat
   wurden homogen vermischt.
b) Herstellung der Härterlösung:
   28,0 T des Polyketimins aus Beispiel 4
   72,0 T Verdünnungsmittel (Zusammensetzung wie oben)
   wurden homogen vermischt.
c) Lackherstellung:
   Der Stammlack aus Beispiel 6 a) und die Härterlösung aus Beispiel 6 b) wurden homogen miteinander vermischt und mit der vorstehenden Verdünnung auf eine Spritzviskosität von 17 bis 20'' nach DIN 53211 eingestellt und auf einem handelsüblichen Basislack auf der Basis organischer Lösemittel naß-in-naß in zwei bis drei Spritzgängen mit einer Trockenfilmdicke von 40 - 100 µm appliziert.

### Beispiel 7

Es wurde wie in Beispiel 6 a) - c) gearbeitet, wobei jedoch als Glycidyl- und Acryloyl-funktionalisiertes Harz Beispiel 2 eingesetzt wurde.

### Beispiel 8

20 g der wäßrigen Harzlösung aus Beispiel 3 und 5 g der wäßrigen Härterlösung aus Beispiel 5 wurden vermischt und auf eine Glasplatte aufgerakelt. Nach 30-minütigem Einbrennen bei 60°C hatte der Klarlackfilm eine Schichtdicke von 40 µm.

### Vergleichsbeispiel 9

### Handelsüblicher Klarlack:

Basis Acryloyl-ungesättigtes Harz und Ketimin.
Das handelsübliche Klarlack-System, bestehend aus Klarlack, Härter und Verdünnung, wurde in der vom Hersteller angegebenen Formulierung gemischt und wie in Beispiel 6 c) beschrieben appliziert.

### Vergleichsbeispiel 10

### Handelsüblicher Klarlack:

Basis Glycidyl-funktionalisiertes Harz und Aminoacrylharz.
Das handelsübliche Klarlack-System wurde in der vom Hersteller angegebenen Formulierung gemischt und wie im Beispiel 6 c) beschrieben appliziert.

Die Lacke aus den Beispielen 6 bis 10 wurden bei 60°C 30 Minuten gehärtet. Die Lackfilme 6 bis 8 zeigten 1 h nach dem Einbrennen eine sehr gute Benzinbeständigkeit, einen guten Slip und eine sehr geringe Kratzempfindlichkeit.

Die Vergleichsbeispiele 9 und 10 wurden auch 24 h nach dem Einbrennen von Superkraftstoff angelöst und waren sehr kratzempfindlich.

## Patentansprüche

1. Bindemittelzusammensetzung für Lösemittel und/oder Wasser enthaltende Überzugsmittel, enthaltend
A) eine oder mehrere Bindemittelkomponenten auf der Basis von (Meth)acryl-copolymeren mit mindestens einer Acryloylgruppe und mindestens einer Epoxidgruppe im Molekül, wobei die Acryloylgruppen und Epoxidgruppen im Zahlenverhältnis 20 : 80 bis 80 : 20 vorliegen, erhältlich durch Umsetzung von einem oder mehreren Di- oder Polyepoxiden auf der Basis von Glycidyl-funktionalisierten (Meth)acrylcopolymeren mit einem Zahlenmittel des Molgewichts (Mn) von 1000 bis 10000, mit α,β-ethylenisch ungesättigten Monocarbonsäuren mit 2 bis 10 C-Atomen, die weitere ethylenische Doppelbindungen aufweisen können, und
B) ein oder mehrere Polyamine mit mindestens zwei primären und/oder sekundären Aminfunktionen, die verkappt sein können, im Molekül, als Härter,
wobei die Komponenten A) und B) im Mengenverhältnis der Äquivalentgewichte von 2 : 0,5 bis 1 : 1,5 vorliegen.

2. Überzugsmittel, enthaltend die Bindemittelzusammensetzung nach Anspruch 1 und darüber hinaus ein oder mehrere organische Lösemittel und/oder Wasser sowie gegebenenfalls ein oder mehrere Pigmente und/oder Füllstoffe, sowie gegebenenfalls lackübliche Zusatzstoffe.

3. Verfahren zur Herstellung der Bindemittelkomponente A) nach Anspruch 1, **dadurch gekennzeichnet,** daß man ein oder mehrere Di- oder Polyepoxide auf der Basis von Glycidyl-funktionalisierten (Meth)acryl-copolymeren mit einem Zahlenmittel des Molgewichts (Mn) von 1000 bis 10000 mit einer oder mehreren α,β-ethylenisch ungesättigten Monocarbonsäuren mit 2 bis 10 C-Atomen, die weitere ethylenische Doppelbindungen aufweisen können, umsetzt.

4. Verfahren zur Herstellung eines Überzugsmittels nach Anspruch 2, dadurch gekennzeichnet, daß man die Bindemittelkomponente A) gemäß Anspruch 3 herstellt und mit einem oder mehreren Polyaminen mit mindestens zwei primären und/oder sekundären Aminfunktionen, die verkappt sein können, im Molekül sowie mit einem oder mehreren organischen Lösemitteln, gegebenenfalls Wasser, gegebenenfalls einem oder mehreren Pigmenten und/oder Füllstoffen sowie gegebenenfalls lacküblichen Zusatzstoffen vermischt.

5. Verfahren zur Herstellung von Mehrschichtlackierungen, dadurch gekennzeichnet, daß ein Klarlack auf der Basis einer Bindemittelzusammensetzung nach Anspruch 1 auf eine Baislackschicht, nach dem Trocknen, Ablüften oder naß-in-naß aufgebracht und gegebenenfalls zusammen mit der Basislackschicht gehärtet wird.

6. Verwendung der Bindemittelzusammensetzung nach Anspruch 1 zur Herstellung von pigmentierten Decklacken.

7. Verwendung der Bindemittelzusammensetzung nach Anspruch 1 zur Herstellung von pigmentfreien Klarlacken.

8. Verwendung nach einem der Ansprüche 6 oder 7 zur Herstellung von bei Temperaturen von 20 bis 80°C härtbaren Deck- und Klarlacken.

9. Verwendung der Bindemittelzusammensetzung nach Anspruch 1 zur Herstellung von pigmentierten Basislacken.

10. Verwendung der Bindemittelzusammensetzung nach Anspruch 1 zur Herstellung lösemittelbeständiger Überzüge.

11. Verwendung der Überzugsmittel nach Anspruch 2 zur Herstellung von Mehrschichtlackierungen.

## Claims

1. A binder vehicle composition for coating media containing solvent and/or water, containing
A) one or more binder vehicle components based on (meth)acrylic copolymers containing at least one acryloyl group and at least one epoxide group in their molecule, wherein the acryloyl groups and epoxide groups are present in a numerical ratio of 20 : 80 to 80 : 20, obtainable by the reaction of one or more di- or polyepoxides based on glycidylfunctionalised (meth)acrylic copolymers with a number average molecular weight (Mn) of 1000 to 10,000 with α,β-ethylenically unsaturated monocarboxylic acids containing 2 to 10 C atoms which may also contain ethylenic double bonds, and
B) one or more polyamines having at least two primary and/or secondary amine functions, which may be capped, in their molecule, as hardeners,
wherein components A) and B) are present in a quantitative ratio of their equivalent weights of 2 : 0.5 to 1 : 1.5.

2. Coating media containing the binder vehicle composition according to claim 1 and additionally containing one or more organic solvents and/or water and optionally one or more pigments and/or extenders, and optionally containing customary lacquer additives.

3. A process for preparing binder vehicle component A) according to claim 1, **characterised in that** one or more di- or polyepoxides based on glycidyl-functionalised (meth)acrylic copolymers with a number average molecular weight (Mn) of 1000 to 10,000 are reacted with one or more α,β-ethylenically unsaturated monocarboxylic acids containing 2 to 10 C atoms which may contain further ethylenic double bonds.

4. A process for producing a coating medium according to claim 2, characterised in that binder vehicle component A) is prepared according to claim 3 and is mixed with one or more polyamines having at least two primary and/or secondary amine functions, which may be capped, in their molecule, and with one or more organic solvents, optionally water, optionally one or more pigments and/or extenders and optionally with customary lacquer additives.

5. A process for producing multilayer coatings, characterised in that a clear lacquer based on a binder vehicle composition according to claim 1 is applied to a base lacquer coat, after drying, ventilating, or wet-into-wet, and is hardened, optionally together with the base lacquer coat.

6. Use of the binder vehicle composition according to claim 1 for the production of pigmented covering lacquers.

7. Use of the binder vehicle composition according to claim 1 for the production of pigment-free clear lacquers.

8. A use according to either one of claims 6 or 7 for the production of covering lacquers and clear lacquers which are hardenable at temperatures of 20 to 80°C.

9. Use of the binder vehicle composition according to claim 1 for the production of pigmented base lacquers.

10. Use of the binder vehicle composition according to claim 1 for the production of solvent-resistant coatings.

11. Use of the coating media according to claim 2 for the production of multilayer coatings.

## Revendications

1. Composition de liant pour des produits de revêtement contenant des solvants et/ou de l'eau, qui contient
A) un ou plusieurs composants liants à base de copolymères (meth)acryliques à au moins un groupe acryloyle et au moins un groupe époxyde dans la molécule, les groupes acryloyle et époxyde étant présents à un rapport en nombre de 20:80 à 80:20, obtenus par réaction d'un ou plusieurs di- ou poly-époxydes à base de copolymères (méth)acryliques à fonctions glycidyle, à un poids moléculaire moyen, moyenne en nombre, (Mn) de 1000 à 10 000, avec des acides monocarboxyliques à insaturation alpha,bêta-éthylénique en C2-C10, qui peuvent contenir d'autres doubles liaisons éthyléniques, et
B) en tant que durcisseur, une ou plusieurs polyamines à au moins deux fonctions amine primaires et/ou secondaires qui peuvent être bloquées,
les composants A) et B) étant présents à un rapport de 2:0,5 à 1:1,5 entre les poids équivalents.

2. Produit de revêtement contenant la composition de liant selon revendication 1, et en outre un ou plusieurs solvants organiques et/ou de l'eau et le cas échéant un ou plusieurs pigments et/ou matières de charge, et le cas échéant des additifs usuels pour les peintures et vernis.

3. Procédé de préparation du composant liant A) selon revendication 1, caractérisé en ce que l'on fait réagir un ou plusieurs di- ou poly-époxydes à base de copolymères (méth)acryliques à fonctions glycidyle, ayant un poids moléculaire moyen, moyenne en nombre, Mn, de 1000 à 10 000, avec un ou plusieurs acides monocarboxyliques à insaturation alpha-bêta-éthylénique en C2-C10, qui peuvent contenir d'autres doubles liaisons éthyléniques.

4. Procédé de préparation d'un produit de revêtements selon revendication 2, caractérisé en ce que l'on prépare le composant liant A) selon revendication 3 et on le mélange avec une ou plusieurs polyamines à au moins deux fonctions amine primaires et/ou secondaires qui peuvent être bloquées, dans la molécule, et avec un ou plusieurs solvants organiques, le cas échéant de l'eau, le cas échéant un ou plusieurs pigments et/ou matières de charge, et le cas échéant des additifs usuels pour peintures et vernis.

5. Procédé pour l'application de revêtements à couches multiples, caractérisé en ce que l'on applique sur une couche de peinture de base, après séchage, évaporation à l'air ou au mouillé-sur-mouillé, un vernis clair à base d'une composition de liant selon revendication 1, et le cas échéant on durcit en commun avec la couche de peinture de base.

6. Utilisation de la composition de liant selon revendication 1 pour la préparation de peintures de couverture pigmentées.

7. Utilisation de la composition de liant selon revendication 1 pour la préparation de vernis clairs sans pigment.

8. Utilisation selon revendication 6 ou 7, pour la préparation de peintures de couverture et de vernis clairs durcissables à des températures de 20 à 80°C.

9. Utilisation de la composition de liant selon revendication 1 pour la préparation de peintures de base pigmentées.

10. Utilisation de la composition de liant selon revendication 1 pour l'application de revêtements résistant aux solvants.

11. Utilisation des produits de revêtement selon revendication 2 pour l'application de revêtements à couches multiples.
